**Europäisches Patentamt**

**European Patent Office**

**Office européen des brevets**

(19)

(11) **EP 1 400 334 A2**

(12) # EUROPEAN PATENT APPLICATION

(43) Date of publication:
24.03.2004 Bulletin 2004/13

(51) Int Cl.⁷: **B29C 47/06**, B32B 27/18
// B29L9:00

(21) Application number: **03015936.2**

(22) Date of filing: **12.07.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.09.2002 IT PN20020073**

(71) Applicant: **Electrolux Home Products
Corporation N.V.
1930 Zaventem (BE)**

(72) Inventor: **Zelli, Roberto
31015 Conegliano, Treviso (IT)**

(74) Representative: **Giugni, Valter
PROPRIA S.r.l.,
Via Mazzini 13
33170 Pordenone (IT)**

(54) **Method for producing sheets of plastic material extruded under inclusion of bactericidal agents**

(57)     Method for producing extruded sheets or injection-moulded parts of plastic material comprising antimicrobial substances that are included solely within a specific thickness (N) of said sheet or part, whereas the remaining thickness (M) thereof is fully free of said antibacterial substances; the method comprises a final co-extrusion of two distinct masses of material, in which the first mass is solely comprised of basic resin under exclusion of any such antimicrobial substances, whereas the second mass is mainly comprised of thermoplastic material pellets, wherein said antimicrobial substances have been previously dispersed in said pellets through an injection-moulding or an extrusion process.

EP 1 400 334 A2

**Description**

The present invention refers to a method concerning a manufacturing process used in the production of sheets or surfaces of thermoplastic material, in particular intended for use in the manufacture of those internal walls or liners of household refrigeration appliances, in which foodstuffs are accommodated for storage, and which are provided with a certain extent of bactericidal activity.

In the related technical literature, such a variety of terms as biocidal, bactericidal, antibacterial and antimicrobial are largely used in this connection. However, in order to prevent this variety of different designations of a same category of products from giving rise to ambiguities and uncertainties, use will be made in the following description of the sole term "antimicrobial" to indicate said category of products.

The practice of providing plastic surfaces with antimicrobial additives is largely known in the art. These agents have been used there originally in view of preventing the same plastic material from undergoing degradation due to the action of microbial organisms.

At the present time, however, the use of such agents has extended to cover applications aimed at ensuring enhanced sanitation and hygiene to the surfaces that are treated with antimicrobial substances in consideration of the fact that they are going to be used as food-storage parts and, therefore, are going to be in contact with foodstuffs.

Most antimicrobial substances in use today are effective against both bacteria and fungi. However, in just a very few cases they are equally effective against both of them, i.e. to a same extent. Most of these substances, furthermore, have not been designed or identified as additives to be mixed up in the plastic material intended to be so protected, but have been rather selected designed to be applied by deposition onto the outer surfaces of the material itself.

A number of antimicrobial additives are known in the art, which are available on the market to the purpose of opposing the growth of bacteria and fungi, as well as to general sanitation and hygiene purposes. These additives vary widely in their chemical composition, but can nevertheless be grouped into three main categories, i.e.:

- organic antimicrobial agents,
- organometallic antimicrobial agents, and
- inorganic antimicrobial agents, in particular metallic compounds.

However, all these substances are generally connected with a number of drawbacks, i.e.:

ORGANIC ANTIMICROBIAL AGENTS: As far as organic antimicrobial agents are concerned, the drawback that is generally encountered with each such antimicrobial substance lies in the tendency thereof to migrate, as well as a really non-negligible vapour pressure. This practically leads to a relatively remarkable loss of efficiency and/or a need for the amount of active substance in the polymer to be increased accordingly.

In addition, these substances usually have a decomposition temperature of approx. 200°C, which generally makes them unsuitable for use in plastic materials, such as for instance polycarbonate, that must be melted at high temperature. Owing to them dissolving molecularly in the polymer, they are not compatible with all polymers and, furthermore, their efficiency largely depends on the nature of the material. In addition, they can also affect the recyclability of the material unfavourably.

INORGANIC ANTIMICROBIAL AGENTS: These substances have actually just a modest or even negligible migration capacity. On the other hand, however, this fact practically limits the capacity of action thereof to direct-contact activity; in other words there is no possibility for areas adjacent to or surrounding the directly treated area to be adequately protected as well. Since inorganic antimicrobial substances are not soluble in the polymers, it is rather difficult to be able to obtain a satisfactorily even and homogeneous mixing effect, which is clearly more important in organic antimicrobial compounds. In fact, there is no possibility at all for these inorganic compounds to migrate from the interior of the surface to such an extent as to be able to replace lost agents.

Since solubility or migration properties do not play any role in the case of inorganic antimicrobial agents, these are on principle compatible with almost all polymers. Not even melting/extrusion temperature plays any important role in this case; inorganic antimicrobial agents, in fact, withstand temperature to a much larger extent, i.e. are much more heat-resistant than the polymers themselves.

Inorganic antimicrobial agents are largely known to be based for the most part on silver; they may also include a modest proportion of copper or zinc. However, since silver is an expensive metal and, on the other hand, just modest amounts of it are actually required in the particular application, it is usually included in some kind of carrier material. And it is just the diversity of the materials used as a carrier that distinguishes the various trade marks and designations of the products. Usually, the carrier material consists of some natural or synthetic inorganic mixture, which shows some ion-exchange capacity for silver ions. It is fragmented and scattered in a very fine manner so as to both reach and cover a large surface area and mix up with the plastics without impairing the mechanical properties thereof to any appreciable extent. The size of the particles on the various carriers ranges from 0.1 to 4.0 μm; the amount of silver loaded onto a carrier is in the order of a few percent points of the total weight thereof, usually 2 percent.

Inorganic antimicrobial compounds can actually be considered as a kind of pigment. For this fact, if added to a clear polymer, they unfailingly alter, i.e. reduce the transparency and the clearness thereof. The actual extent to which optical properties are lost depends of course on the amount and the size of the particles added, as well as the index of refraction of the antimicrobial agents added; furthermore, such an alteration of optical properties may bring about further drawbacks.

From the disclosure in EP 0 904 323 B1 to BIOCOTE LTD, the method is known of producing an antimicrobial powder containing various agents and compounds, in various proportions and aggregations of the active antimicrobial agents and the plastic-based resins containing such agents.

These powders are produced with the help of a process of extrusion and subsequent pulverization of a previously prepared agglomerate containing said substances in the original state thereof.

In addition, the above-cited patent publication discloses a method for depositing a coating of said antimicrobial powder onto a substrate using the electrocoating technology, i.e. the technology used for electrostatic painting.

However, in the particular case of the production of liners for refrigeration appliances intended for food storage applications, this technology is not acceptable to any satisfactory extent, owing to both the considerable complications and costs (including additional processing needs) that it would imply and bring about from a production point of view, and the side-effects in terms of powder-induced contamination which generally unprotected operators would be exposed to in such a production ambient as the one in which the process itself would necessarily take place. In addition, a coating of the surface of the liner of a refrigeration appliance with such a kind of powders would be made practically ineffective after a certain and generally not long period of time, owing to the interior of the storage liner of such refrigeration appliances being usually subject to frequent cleaning and, therefore, scrubbing.

Finally, electrostatic application of such powders onto the surfaces of refrigeration appliance liners, which are largely known by this time to be in all cases made of plastic material, would prove by all means unfeasible, owing to plastics being notoriously non-conducting materials and, as a result, not allowing for any electrostatic powder coating process to be carried out on them.

A deposition of such powders in a liquid form, which has been considered as an alternative to the above-mentioned technology, although fully feasible in a laboratory environment, is certainly not practicable in an actual industrial mass-production environment due to both extremely severe and demanding technical and environmental complexities, and the basic fact that this would not prove effective in doing away with the above-cited problem of a rapid downgrading and eventual nullification of the protective layer owing to frequent cleaning and scrubbing of the internal walls of the refrigerator liner.

From the disclosure in the patent publication US 6,248, 342 B1 to AgION Technologies, the method is known for providing a laminated surface that has an antimicrobial activity; however, the laminated products obtained in this manner are produced by associating and laminating together a plurality of paper and fabric layers, and these materials cannot certainly be used to manufacture refrigerator liners owing to both industrial engineering reasons, such as manufacturing complexity, poor processability and formability, and higher costs, and above all the specifications that are to be met by the final product, which must be impermeable, i.e. waterproof, and ensure an acceptable level of mechanical strength, not to mention the definite requirements that must in this case be duly complied with as far as the visual image of the product is concerned (the interior of the liner, i.e. the storage compartment of a refrigerator must not only be smooth and cleanable, but it shall also "look" like this!)

It would therefore be desirable, and it is actually the object of the present invention, to provide a method for the production of a subsequently processable surface of plastic material featuring antimicrobial activity, which is in particular adapted to be used to manufacture foodstuffs holding liners of refrigeration appliances, is capable of being mass-produced to industrial-scale standards, is capable of preserving its antimicrobial activity over an extended, practically unlimited period of time, and is finally capable of being produced and processed in a fully automated manner.

Furthermore, this method according to the present invention must be capable of being easily and readily implemented and carried out using existing techniques and tools, without polluting or anyway affecting the working environment.

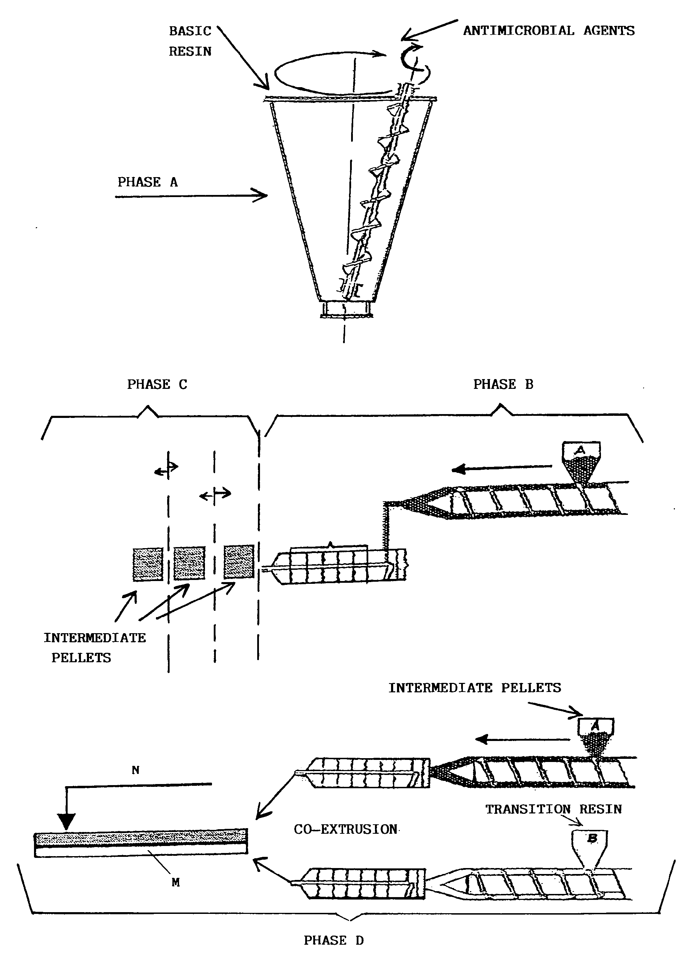

According to the present invention, these aims are reached in a particular method for the production of surfaces having a base support of plastic material, said method incorporating the characteristics as recited in the appended claims and being described below by way of non-limiting example with reference to the accompanying drawing.

The first necessary step to be taken in this connection lies in realizing that the most straightforward way to obtaining surfaces provided with antimicrobial properties consists in directly, i.e. since the beginning, making surfaces, for instance in the form of sheets or plates, which are provided with an antimicrobial activity that is inherently incorporated in the same sheet or plate. In substance, a method can be conceived and implemented, according to which the antimicrobial agents are associated to the thermoformable plastic surface not after the surface itself has been produced, using an additional, albeit simultaneous operation to such a purpose, but are rather included in the plastic resin itself when it is being processed and prepared with all its components in the original powder or pellet state thereof. In fact, the first operation that must be taken into consideration is the one aimed at obtaining a conglomeration in which all the various elements needed or required for the application, i.e. the basic resin, the possible pigments and any other possible agents and additives, such as condensing agents and the like, further of course to the antimicrobial agent or agents themselves, must come together.

Such a conglomeration must then be suitably processed and thoroughly mixed by means of appropriate tools and equipment, such as for instance hoppers, concrete mixers, and the like, in view of obtaining a final mixture that is as homogeneous as possible.

This final mixture is then delivered to an extrusion process of a generally known type used to extrude plastic materials, which is adapted to produce either a continuous surface or distinct sheets of thermoplastic material, in particular intended for use in liners or storage compartments of refrigeration appliances.

The thus obtained product is therefore originated since the beginning with the desired antimicrobial agents that are present both within the thickness, and throughout the thickness, and on the outside of the surface, and this solves - at least theoretically - all of the afore discussed problems.

However, it has been found that such a pre-mixing of the antimicrobial agents with the basic resin and the other possible additives and agents, does not actually prove sufficient in ensuring an adequate uniformity in the distribution of said antimicrobial agents themselves within the mass, i.e. the body of the surface and on the outside thereof, owing mainly to the different sizes of the various pellets and granules.

Furthermore, and above all, this method causes the antimicrobial agents to distribute throughout the whole thickness of the sheet, whereas it would be sufficient for just an adequately deep, but not unnecessarily too deep outer layer thereof to be provided with said antimicrobial agents therewithin.

As a matter of fact, in order to have the antimicrobial agents evenly distributed throughout the whole thickness of the sheet, the need would arise for considerable amounts of the same agents to be used, and this fact, considering that it anyway does by no means ensure any enhancing effect of the antimicrobial protective action on the surface of the sheet, would constitute an obvious unproductive over-usage.

The invention itself is based on an inherently simple realization.

According to the present invention, in fact, in order to do away with such a drawback, the association of the antimicrobial agents is carried out according to following peculiar criteria:

a) the production of the sheet or surface for thermoforming is not carried out within a single operation of simple extrusion, but rather within an operation of co-extrusion of two mixtures or compounds of different resins;
b) the resin compound, which in such a co-extrusion process comes to lie on the outer side of the sheet (i.e. the active side from a antimicrobial or antibacterial point of view), is in turn obtained with the help of a specially designed process that is carried out previously.

In the following description, these processing steps are dealt with in detail and illustrated with reference to the sole accompanying Figure, which is a symbolical view of the phases involved by the method according to the present invention.

In the first place (Phase A), a so-called transition resin is selected starting from a basic resin adapted to be mixed with the desired antimicrobial agents, as well as all other additives, agents, pigments and the like, as may be required, and all these components are then mixed up together mechanically.

According to the agents being used, an appropriate type of transition resin will be of course selected. In this connection, it has been found experimentally that optimum results are obtained when the combinations of antimicrobial agents and basic resins according to Table A below are used:

## TABLE A

ANTIMICROBIAL AGENTS:

        BCA 21 – 61 (SANITIZED)

        BCA 21 – 41       "

        BCA 21 – 51       "

BASIC RESINS:

        POLYSTYRENE

        CRYSTALLINE POLYSTYRENE (HIPS)

        ABS

        ALL THERMOPLASTIC RESINS

To merely informative purposes, the technical specifications of the antimicrobial agent identified with the trade designation BCA 21 - 61 by SANITIZED AG (Switzerland) are indicated in Table B below.

## TABLE B

| ANTIMICROBIAL AGENT BCA 21-61 |
| --- |
| TECHNICAL SPECIFICATIONS |

- Carrier: ceramic matrix on a silicate base

- $Ag^+$ ion contents in the carrier: 0.1% - 5.0%

- Chemical properties: neutral and non-reactive, stable to heat, water and air, and resistant to a light pH

- Hydrolysis: the product does not hydrolyse, since almost insoluble in water

- Max. contents in final product, %: 0.2 – 0.4%

- Microbiologic activity spectrum: Staphilococcus aureus, Escherichia coli

- Activity level in terms of minimum inhibitory Concentration (MIC), µg/ml:

| | |
| --- | --- |
| Staphilococcus aureus | 400 µg/ml |
| Escherichia coli | 400 µg/ml |
| Aspergillus niger | 1600 µg/ml |
| Saccharomyces cerevisiae | 1600 µg/ml |

- Interaction with food components:

  BC A 21 – 61 may be inactivated when coming into contact with sulphur-containing proteins, such as for instance cysteine

In general, silver ions $Ag^+$ are largely known for their capacity of being active as disinfectants in public water supply systems. Silver ions are active and prove effective against a wide spectrum of microorganisms, such as Pseudomonas aeruginosa, Salmonella cholerasius, Listeria monocytogenes, Enterococcus faecium, Rhinovirus, Rotavirus.

Next (Phase B), the thus obtained transition resin is extruded/drawn, or even injection-moulded, in view of reaching a further, finer and more even integration of its components with each other and, in particular, an improved integration of the antimicrobial agents and the basic resin.

The product resulting from such extrusion/drawing or moulding operation can take various forms, such as for instance strings, rods, sheets and the like.

In the subsequent phase (Phase C), the product resulting from the above-described Phase B is fragmented into a large number of minute parts, e.g. by means of a shredding, grinding, milling or cutting operation, or even a combination thereof, possibly associated with other operations aimed at reducing the average size of the so obtained product, which will be referred to as "intermediate pellets" in the following description.

The last phase of the process makes use of two distinct mixtures, i.e. a first mixture, which consists of the above-defined intermediate pellets, and which contains a definite percentage of antimicrobial agents, and a mixture that prevailingly consists of the basic resin, which is used to produce the thicker portion of the sheet, and which may be constituted by a distinct mass of transition resin that is fully identical to the transition resin used to produce said intermediate pellets.

This last phase of the process (Phase D) consists of the actual operation of co-extrusion of said two distinct mixtures: through such a co-extrusion process, the technique and the peculiarities of which are well-known to those skilled in the art, a sheet is produced, which is formed by two contiguous, i.e. overlaid, mutually bound layers M and N: a first layer M formed by conventional basic resin, such as polystyrene, suitable for thermoforming and typically with a thickness of just a few millimetres, and a second layer N, typically with a thickness ranging from 40 μm to 200 μm, which is obtained from the afore-cited intermediate pellets and therefore incorporates the desired amount of antimicrobial agents.

This last phase of the process may on the other hand be preceded by a further mixing of said intermediate pellets with a definite additional amount of basic resin, so as to reach to a definite percentage of basic resin in said layer N.

The above-described method also offers a number of further advantages. In fact, further to the desired result of obtaining a plastic sheet that, while being substantially homogeneous, features just an outer layer - having a minimum, but not negligible thickness - that actually incorporates the antimicrobial agents, it has also been verified - as it can on the other hand be also reasonably assumed - that the combination of the whole set of the above-described operations is really capable of producing the desired final product with a high uniformity in the composition and in the distribution of the antimicrobial agents, thanks mainly to the double extrusion operation, which the initially incorporated antimicrobial agents are subject to, and the advantage deriving from making use of said transition resin for said double extrusion to be able to be carried out.

In fact, said double extrusion is effective in bringing about a double dispersion of the antimicrobial agents and, therefore, an improved uniformity in such dispersion.

In addition, the fact that the antimicrobial agents are initially mixed with the transition resin enables the most advantageous type of such a transition resin to be selected, along with the best possible extrusion/drawing parameters (i.e. temperature, pressure, time, composition, and the like), which may of course be different from the resin used in the final extrusion and the related processing parameters.

Anyway, the basic advantage deriving from the above-described method lies in the fact that the co-extruded plastic sheet resulting therefrom has substantially the same mechanical/ thermal properties as the basic resin of a conventional sheet; in particular, it can be processed and, especially, formed by the usual thermoforming process in the well-known way and manner. In substance, the above-described method does by no means affect, nor has any negative consequence on, either the processability of the so obtained plastic sheet or the processing cycle of such a plastic sheet.

Finally, a further advantage of the present invention lies in the fact that the above-described operations must not necessarily be carried out within a continuous processing cycle, but can be carried out at later times, under a resulting advantageous optimisation in both costs and logistic and production planning, since each one of the afore cited four working phases can be carried out independently of and temporally separated from the subsequent and/or preceding phases.

In order to ensure that the two co-extruded layers are adequately bound to each other, the afore-mentioned intermediate pellets may be advantageously composed of the same basic resin as the one used to produce the thicker layer of the co-extruded sheet.

On the other hand, the illustrated solution, which has the peculiarity of a double extrusion, or anyway a double hot-processing, of the plastic material being carried out, while producing a semi-finished product defined as "intermediate pellets" therebetween, allows actually for a useful and different improvement that may prove particularly advantageous in certain circumstances.

It may in fact occur that the plastic sheet to be treated with antimicrobial substances has a very reduced thickness, so that the saving effect that can be obtained by avoiding a treatment with said antimicrobial substances of the sole portion M of said sheet, while solely treating the remaining portion N of said sheet with the above-described method, turns out to be rather modest from the mere point of view of the actual amount of antimicrobial agents that can be saved.

If the costs of the double extrusion operation are then considered along with the complications and the charges arising from the accessory preparations and processing of the semi-finished products (phases A, B and C), the proposed saving effect can actually turn into an additional cost.

If the preference is therefore given at this point to the conventional method of dispersing the antimicrobial substance directly in the plastic material prior to the extrusion of a sheet, which will therefore contain said antimicrobial substance throughout its whole thickness, the well-known drawback of an inadequate and irregular dispersion of said antimicrobial substance would unavoidably be incurred.

In order to avoid such a problem, it has been experimentally found that an advantageous solution might consists in producing a first product that is fully identical to the one that has been previously referred to as the "intermediate pellets" (Phases A, B and C), and then going through a fourth operation of dispersion/mixing of said intermediate pellets in a mass of transition resin or basic resin, depending on the actual needs, thereby obtaining a granular mass that we shall define here as "composite resin".

This composite resin is then extruded, or injection moulded, depending on the intended use and the preferred techniques in connection with each single application, in a substantially traditional manner, thereby obtaining a sheet of plastic material or, more generally, an extruded or injection-moulded finished product, which may have even a quite small thickness, but features a uniformity in the dispersion of antimicrobial substance that is certainly better than the one attainable by dispersing said antimicrobial substance in the basic resin directly. Furthermore, a method like the above-described one does not present any difficulty of a technological nature nor any other problem related to the process itself or the compatibility of the materials used in the mixture, thanks to the identical nature of the basic resin used to disperse the antimicrobial agent therewithin, and the basic resin, or the transition resin, which is used to disperse said intermediate pellets therewithin, thereby obtaining the above-described composite resin.

Repeated experimental verifications and tests, which have been carried out in accordance with the SAN-BIO 32/99 and ASTM E 2180-01 Test Methods, made it possible to invariably establish that the agents and compounds indicated in the preceding Table A are particularly effective and advantageous in enabling the desired thermoformable sheets to be produced.

As far as the antimicrobial agents themselves are concerned, it has been found that a particularly advantageous plastic sheet for thermoforming can be obtained when the antimicrobial agent used in the application is of the type available on the market under the designation BCA 21-61 and produced by SANITIZED AG in Switzerland, particularly when said agent is used in combination with crystalline polystyrene (HIPS).

The peculiarities of the above-cited Test Method SAN-BIO 32/99, corresponding to the ASTM E 2189-01 Method, are set forth in the herewith attached Appendix A.

1. Scope

The SAN-BIO 32/99 Test Method is used for the quantitative determination of the antimicrobial effectiveness of the correspondingly treated materials.

The Method applies to smooth surfaces and plastic surfaces.

2. Procedure

The test sample is first sterilized and then impregnated with a definite amount of suspended germs and covered with a layer of sterile plastic film.

The so prepared sample is allowed to incubate for 24 hours in a closed ambient at a temperature of 37 to 39°F.

Upon incubation, the sample is flushed, jointly with the plastic film, with a definite amount of sterile diluting solution.

3. Assessment Procedure

The assessment is done by counting the so-called Colony Forming Units, or CFUs, in the above-cited solution.

The looked-for value of bacteriostatic activity is based on the ratio of the CFUs of the treated sample to the CFUs of a non-treated reference sample after a period of incubation of 24 hours.

The results are presented using a logarithmic scale:

$$\text{Antimicrobial activity} = \log(CFU_{non-treat}/CFU_{treat})$$

4. Rating of results

-    Antimicrobial activity from 0.0 to 0.9: no significant reduction;
-    Antimicrobial activity from 1.0 to 1.9: significant reduction;
-    Antimicrobial activity greater than 2.0: very significant reduction.

Claims

1.    Method for producing extruded sheets or injection-moulded parts of plastic material comprising antimicrobial substances, **characterized in that** said antimicrobial substances are included solely within a specific thickness (N) of said sheet or part, and that the remaining thickness (M) thereof is fully free of said antimicrobial substances.

2. Method according to claim 1, **characterized in that** it comprises following phases:

- aggregation of a mass of transition resin and dispersion of antimicrobial substances, plus possibly any further additives and substances, such as pigments, condensing agents and the like, as may be required, in such a resin, whereupon the so aggregated components and elements are mixed up until an homogeneous mass is obtained (Phase A);
- extrusion, or injection-moulding, of said homogeneous mass in view of obtaining an extruded or injection-moulded product in the form of a continuous flat or rod-like product, or having any other appropriate physical configuration (Phase B);
- separation of said extruded or injection-moulded product into a plurality of distinct, small-sized parts, preferably by cutting, shredding, milling or similar process, until a so-called intermediate granular material, or intermediate pellets, is obtained (Phase C);
- co-extrusion of two distinct masses of material, in which the first mass is solely comprised of basic resin under exclusion of any part of such intermediate granular material, whereas the second mass is mainly comprised of said intermediate pellets, so as to form a single and same sheet or planar body of thermoplastic material having two distinct thicknesses (M, N) constituting contiguous layers of said sheet or planar body of thermoplastic material (Phase D).

3. Method according to claim 2, **characterized in that** said intermediate pellets are further mixed with a definite amount of basic resin prior to undergo said co-extrusion phase.

4. Method according to any of the preceding claims, **characterized in that** said basic resin is substantially comprised of crystalline polystyrene (HIPS).

5. Method according to any of the preceding claims, **characterized in that** said thickness including antimicrobial substances has a depth ranging from 40 to 200 μm.

6. Method for producing extruded sheets or injection-moulded parts of plastic material comprising antimicrobial substances, **characterized in that** said antimicrobial substances are included throughout the whole thickness of said sheets or parts, and that said method comprises following phases:

- aggregation of a mass of basic resin or transition resin and dispersion of antimicrobial substances, plus possibly any further additives and substances, such as pigments, condensing agents and the like, as may be required, in such a resin, whereupon the so aggregated components and elements are mixed up until an homogeneous mass is obtained (Phase A);
- extrusion, or injection-moulding, of said homogeneous mass in view of obtaining an extruded or injection-moulded product in the form of a continuous flat or rod-like product, or having any other appropriate physical configuration (Phase B);
- separation of said extruded or injection-moulded product into a plurality of distinct, small-sized parts, preferably by cutting, shredding, milling or similar process, until a so-called intermediate granular material, or intermediate pellets, is obtained (Phase C);
- dispersion/mixing of said intermediate pellets in said basic resin or transition resin so as to obtain an evenly and finely mixed granular mass adapted to be injection-moulded or extruded (composite resin);
- final extrusion or injection-moulding of said composite resin.

7. Method according to any of the preceding claims, **characterized in that** said antimicrobial substances comprise such agents as the types BCA 21-61 or BCA 21-51 or BCA 21-41 (Sanitized AG, Switzerland).

BASIC
RESIN

ANTIMICROBIAL AGENTS

PHASE A

PHASE C

PHASE B

A

INTERMEDIATE
PELLETS

INTERMEDIATE PELLETS

A

N

TRANSITION RESIN

B

CO-EXTRUSION

M

PHASE D